# DEMANDE DE BREVET EUROPEEN

(11) **EP 0 688 495 A1**
(43) Date de publication de la demande: **27.12.1995**
(21) Numéro de dépôt: 95401452.8
(22) Date de dépôt: 20.06.1995
(51) Int. Cl.: A01D 90/08, A01D 87/12, A01D 85/00

(54) **Dispositif de ramassage et de chargement de bottes pour remorques auto-porteuses**

(30) Priorité: 22.06.1994 FR 9407645
(71) Demandeur: SOCIETE INDUSTRIELLE D'APPLICATIONS MECANIQUES, F-86330 Moncontour (FR)
(72) Inventeur: Metais, Paul, 86170 Neuville-du-Poitou (FR)
(74) Mandataire: Jaunez, Xavier

(57) **Abrégé**

L'invention concerne un dispositif de ramassage et de chargement de bottes comportant un moyen de ramassage agencé latéralement par rapport au châssis de la remorque et un moyen poussoir déplaçable au-dessus d'un plateau pivotant de chargement.

Conformément à l'invention, le moyen de ramassage (10) comporte successivement une rampe inclinée (11) agencée pour amener une botte de sa position de ramassage au sol jusqu'à un niveau intermédiaire entre le sol et le niveau horizontal du plateau de chargement (5), et un chemin de convoyage incurvé et ascendant (12), formé de rouleaux d'entraînement motorisés (30, 31), avec de préférence des rouleaux coniques (30), et agencé pour amener la botte au niveau du plateau de chargement (5) et la faire glisser transversalement sur ledit plateau. Le moyen poussoir (13) est monté sur le châssis de la remorque (1) en-dessous du plateau principal (3) de celle-ci, pour pousser la botte transférée vers l'avant du plateau de chargement (5), de façon à permettre le transfert d'une deuxième botte en arrière de la première botte.

## Description

L'invention concerne le ramassage et le chargement de bottes sur les remorques tractées du type auto-porteuses.

Les bottes (ou balles) de foin, paille, luzerne, ou analogue, requièrent pour leur manutention des appareillages à la fois robustes et puissants, car leur poids se situe généralement entre 500 et 800 kg. Ces bottes sont souvent parallélépipédiques (avec une longueur d'environ 2,5 m), ou encore cylindriques, ces dernières étant éventuellement enrubannées. Les bottes parallélépipédiques sont intéressantes pour la mise en tas de grandes dimensions avec un volume compact.

Pour organiser la manutention de ces bottes, c'est-à-dire le ramassage individuel au sol, le chargement sur un plateau de réception d'une remorque, et le déchargement global de toutes les bottes par relevage de ce plateau, on a développé depuis une vingtaine d'années le concept de remorques agraires auto-chargeuses, qui sont tirées par un tracteur ou engin analogue et équipées des appareils nécessaires pour assurer le ramassage et le chargement des bottes.

Dans les conceptions anciennes, on utilisait pour le ramassage et le chargement des bottes une rampe inclinée transférant une botte sur un plateau de chargement monté pivotant en avant d'un plateau principal de réception et de déchargement (voir FR-A-2.489.654), ou encore une fourche à pics articulée sur le châssis de la remorque autour d'un axe transversal (pour un levage par rotation de 90° jusqu'au niveau d'un plateau de réception et de déchargement) et d'un axe longitudinal (pour une libération des bottes par rapport aux pics par rotation de 90° sur le plateau précité), les bottes chargées étant progressivement poussées vers l'arrière par un système à vérin vers une butée d'extrémité dudit plateau (voir FR-A-2.560.488).

Plus récemment, on a proposé des dispositifs utilisant un concept de rampe inclinée dont le châssis est monté pour pivoter à la fois autour d'un axe horizontal et d'un axe vertical pour transférer la botte ramassée au sol sur une plate-forme réceptrice de la remorque (voir FR-A-2.673.804), ou encore autour d'un axe unique incliné par rapport au plan horizontal et au plan vertical contenant l'axe longitudinal de la remorque, pour réaliser par un système à came, en une seule rotation, le mouvement de la rampe inclinée (voir EP-A-0 531 244).

On connaît en particulier un dispositif du dernier type, agencé pour transférer successivement deux bottes sur un plateau pivotant de chargement, en les disposant transversalement, de façon qu'au relevage de ce plateau le chargement s'organise en deux couches de bottes sur le plateau principal de la remorque.

Il s'agit plus précisément d'un dispositif comportant un moyen de ramassage agencé latéralement par rapport au châssis de la remorque pour ramasser une botte au sol selon une direction de ramassage parallèle à la direction de marche de la remorque et transférer cette botte sur un plateau pivotant de chargement basculé en position horizontale, et un moyen poussoir qui est déplaçable au-dessus de ce plateau parallèlement à l'axe longitudinal de la remorque pour permettre le transfert d'une deuxième botte sur le plateau de chargement, ledit plateau étant articulé autour d'un axe transversal en avant de la remorque pour charger, par relevage jusqu'à une position sensiblement verticale, les deux bottes ainsi transférées sur un plateau principal de réception et de déchargement en bloc des bottes qui est articulé en arrière dudit châssis.

Le moyen de ramassage est du type de celui qui est décrit dans le document EP-A-0 531 244 précité, et le moyen poussoir est monté sur le châssis en avant de la rampe articulée, pour pousser vers l'arrière la botte qui a été transférée sur le plateau pivotant avant le relevage dudit plateau.

Un tel dispositif est certes plus performant que les conceptions anciennes précitées, mais il présente encore des inconvénients importants.

Outre une structure complexe et fragile, exigeant notamment une précision élevée pour le positionnement de la came, la présence du moyen poussoir à l'avant de la remorque implique un encombrement longitudinal non négligeable (environ 1,20 m). De plus, le fait que le transfert d'une botte s'effectue en avant du plateau pivotant oblige à disposer la rampe inclinée articulée très en avant de la remorque, ce qui implique une longueur importante pour la flèche de la remorque, et donc un accrochage plus éloigné pour le tracteur, ceci au détriment de l'encombrement en longueur et de la maniabilité.

L'invention a précisément pour but de résoudre ce problème en concevant un dispositif ne présentant pas les inconvénients précités.

L'homme de métier pourrait tenter de trouver une solution dans d'autres appareillages connus de chargement/déchargement de bottes avec lesquels les bottes sont transférées sur un plateau de réception non pivotant. On pourra par exemple se référer à ce titre aux documents GB-A-2 092 089 et CH-A-481 557.

Le document GB-A-2 092 089 décrit un appareillage de chargement/déchargement de bottes avec lequel les bottes sont transférées sur un plateau de réception (non pivotant) en tournant de 90° par rapport à la direction de ramassage, pour former des groupes de trois bottes mises bout à bout qui sont alors transférées en bloc sur un empilement chargé au moyen d'un bras pivotant à fourches Le moyen de ramassage utilise une rampe inclinée amenant chaque botte sur un plateau latéral qui est au niveau du plateau de réception, et la rotation de 90° de la botte se fait par une chaîne horizontale prévue sur le plateau latéral. Il convient de noter qu'il n'est prévu aucun moyen poussoir monté en-dessous du plateau principal pour agir longitudinalement.

Le document CH-A-481 557 décrit quant à lui un appareillage équipant un plateau de chargement non articulé de remorque, avec lequel le ramassage des bottes est réalisé par une gouttière (rabattable) inclinée transférant les bottes en les faisant tourner de 90° pour les faire glisser transversalement sur un plateau élévateur associé à un système articulé de levage agencé sous le plateau de chargement. Le moyen de ramassage de cet appareillage, tel qu'illustré en particulier aux figures 8, 9, 11 du document, est donc constitué d'une gouttière articulée sur le plateau de chargement et équipée de dents centrales d'entraînement. Là encore, aucun moyen poussoir n'est associé à un plateau pivotant de chargement. De ce fait, le système articulé de levage doit être dimensionné pour lever les bottes de la pile verticale en formation.

L'arrière-plan technologique de l'invention peut enfin être illustré par les documents GB-A-2 051 730, FR-A-2 331 273, US-A-3 155 226 et FR-A-575 996.

L'invention a ainsi pour objet de réaliser un dispositif de ramassage et de chargement de bottes pour remorques auto-porteuses qui soit peu encombrant dans la direction longitudinale, en autorisant l'utilisation de flèches courtes pour la traction de la remorque, tout en étant simple, robuste, et fiable.

L'invention a également pour objet de réaliser un dispositif de ramassage et de chargement de bottes dont la structure permet une adaptation aisée à différentes dimensions et/ou formes de bottes, avec un cycle de chargement à la fois rapide et automatisé.

Il s'agit plus particulièrement d'un dispositif de ramassage et de chargement de bottes pour remorques auto-porteuses, comportant un moyen de ramassage agencé latéralement par rapport au châssis de la remorque pour ramasser une botte au sol selon une direction de ramassage parallèle à la direction de marche de la remorque et transférer cette botte sur un plateau pivotant de chargement basculé en position horizontale, et un moyen poussoir qui est déplaçable au-dessus de ce plateau parallèlement à l'axe longitudinal de la remorque pour permettre le transfert d'une deuxième botte sur le plateau de chargement, ledit plateau étant articulé autour d'un axe transversal en avant de la remorque pour charger, par relevage jusqu'à une position sensiblement verticale, les deux bottes ainsi transférées sur un plateau principal de réception et de déchargement en bloc des bottes qui est articulé en arrière dudit châssis, caractérisé en ce que :
- le moyen de ramassage comporte successivement une rampe inclinée agencée dans la direction de ramassage pour amener une botte de sa position de ramassage au sol jusqu'à un niveau intermédiaire entre le sol et le niveau horizontal du plateau de chargement, et un chemin de convoyage incurvé et ascendant, formé de rouleaux d'entraînement motorisés, agencé pour amener la botte au niveau du plateau de chargement pour faire glisser transversalement cette botte sur ledit plateau;
- le moyen poussoir est monté sur le châssis de la remorque en-dessous du plateau principal, en étant agencé pour pousser la botte ainsi transférée vers l'avant du plateau de chargement de façon à permettre le transfert sur celui-ci d'une deuxième botte en arrière de la première botte.

Conformément à un mode d'exécution, la rampe inclinée comporte des chaînes équipées de griffes, avec, en partie haute de celle-ci, au moins un rouleau motorisé d'entraînement et de dégagement servant à dégager des griffes la botte qui passe sur le chemin de convoyage incurvé et ascendant. De préférence, la rampe inclinée comporte des rouleaux d'entraînement et de dégagement entre les chaînes adjacentes, et ces rouleaux sont entraînés en synchronisme avec lesdites chaînes, de préférence par un moyen d'entraînement commun.

En variante, la rampe inclinée comporte des rouleaux cylindriques d'entraînement à arêtes de prise longitudinales, lesdits rouleaux ayant un diamètre croissant de l'entrée vers la sortie de ladite rampe.

Conformément à une autre caractéristique du dispositif, le chemin de convoyage incurvé comporte au moins deux rouleaux coniques de guidage et d'entraînement formant une trajectoire ascendante incurvée en quart de cercle, et un rouleau terminal d'entraînement cylindrique d'axe parallèle à l'axe longitudinal de la remorque et adjacent au plateau de chargement. En particulier, les rouleaux coniques sont formés de faces latérales trapézoïdales se raccordant au niveau d'arêtes d'entraînement agencées selon des génératrices, tandis que le ou les rouleaux d'entraînement et/ou de dégagement et le rouleau terminal d'entraînement sont formés de faces latérales rectangulaires se raccordant au niveau d'arêtes d'entraînement agencées selon des génératrices, ces différents rouleaux comportant par exemple six faces latérales formant une section transversale hexagonale.

D'autres aménagements secondaires seront avantageusement prévus, séparément ou en combinaison :
- le chemin de convoyage incurvé et ascendant est bordé, du côté extérieur de la trajectoire, par une rambarde de guidage et de sécurité ;
- le plateau de chargement est articulé en extrémité avant du plateau principal par deux brides latérales délimitant une échancrure associée au passage du moyen poussoir ;
- le moyen de ramassage est relevable et repliable sur le châssis de la remorque ou sur le plateau de chargement, grâce à une première articulation entre la rampe inclinée et le chemin de convoyage incurvé et ascendant, et à une deuxième articulation entre ledit chemin et le châssis de la remorque.

D'autres caractéristiques et avantages de l'invention apparaîtront plus clairement à la lumière de la description qui va suivre et des dessins annexés, concernant un mode de réalisation particulier, en référence aux figures, où :
- les figures 1 et 2 sont deux vues en élévation d'une remorque auto-chargeuse équipée d'un dispositif de ramassage et de chargement de bottes conforme à l'invention dont on ne distingue ici que le moyen poussoir, respectivement en cours de chargement (plateau principal en position basse légèrement inclinée vers l'arrière) et (à une échelle plus faible) lors du déchargement global (plateau principal relevé) ;
- la figure 3 est une vue en perspective de la partie avant de la remorque, permettant de distinguer le dispositif de ramassage et de chargement de bottes;
- la figure 4 illustre schématiquement, par des étapes a) à f), le mode de ramassage et de chargement successif de deux bottes sur le plateau pivotant de chargement de la remorque;
- la figure 5 est une vue de dessus d'une variante du dispositif précédent, dans laquelle la rampe inclinée est à rouleaux cylindriques d'entraînement dont le diamètre va croissant de l'entrée vers la sortie de ladite rampe;
- la figure 6 est une vue en perspective de la rampe inclinée à rouleaux cylindriques de la variante de la figure 5 ;
- la figure 7 est une coupe transversale de l'un des rouleaux coniques ou cylindriques utilisés, montrant la forme hexagonale et les arêtes de prise agencées au niveau des génératrices.

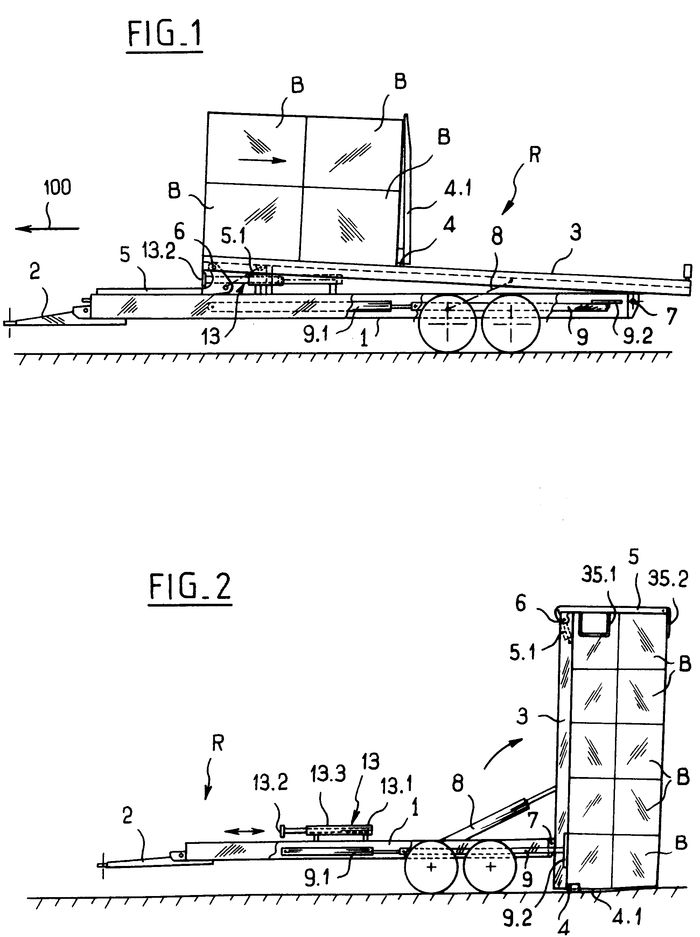

Les figures 1 et 2 illustrent une remorque auto-chargeuse R équipée d'un dispositif de ramassage et de chargement de bottes conforme à l'invention. Conformément à la conception traditionnelle de telles remorques auto-chargeuses, il est prévu un châssis 1 équipé en avant d'un timon 2 de traction permettant le remorquage par un tracteur non représenté ici, avec un plateau principal de réception et de chargement 3 qui est articulé en 7 en arrière de ce châssis 1. Le plateau principal 3 reçoit des paires de bottes superposées B, lors de son chargement progressif de l'avant vers l'arrière, par mise en place sur celui-ci au moyen du relevage d'un plateau pivotant de chargement 5 articulé autour d'un axe transversal 6 en avant de la remorque (le vérin de commande du pivotement du plateau est schématisé en 5.1 par des traits mixtes). La remorque est ainsi chargée progressivement jusqu'à ce que le plateau principal soit chargé entièrement, par exemple de dix bottes B, après quoi l'opérateur amène la remorque sur le site de déchargement, qui peut être en plein champ ou dans une grange, le déchargement global de toutes les bottes B se faisant par bennage, c'est-à-dire pivotement du plateau principal 3 autour de son axe 7, grâce à des vérins de levage 8, éventuellement complétés par des vérins de décollage (non représentés ici) pour le début du pivotement du plateau principal, jusqu'à ce que ledit plateau occupe la position essentiellement verticale illustrée sur la figure 2. Le déchargement s'effectue alors en bloc, avec l'aide d'éjecteurs télescopiques 9 qui sont déplaçables dans la direction longitudinale de la remorque, lesdits éjecteurs étant intégrés au châssis 1. On a noté 9.1 le vérin d'actionnement des deux éjecteurs, et 9.2 leur plaque de poussée, qui est articulée pour s'escamoter lors de la rentrée des éjecteurs. On remarquera qu'en l'espèce, la remorque ne présente aucun rebord arrière surélevé contre lequel sont poussées les bottes chargées, car on a préféré utiliser ici un chariot coulissant 4 déplaçable longitudinalement sur le plateau principal 3, lequel chariot est rappelé (par un système à ressorts, ou à treuil électrique ou hydraulique, ou à vérin hydraulique, ce système n'étant pas représenté ici) vers l'avant de la remorque. Au fur et à mesure du chargement, les ressorts se tendent progressivement, jusqu'au chargement complet. Le chariot 4, sur lequel est posée la première paire de bottes B, présente des branches d'appui articulées 4.1 qui reculent ainsi progressivement vers l'arrière lors du chargement. En position de déchargement (figure 2), la sortie des éjecteurs 9 est commandée pour aider au déchargement, le tracteur étant alors mis au point mort pour utiliser la force de réaction. On évite ainsi l'appui d'un rebord rigidement solidaire du plateau principal comme cela est traditionnellement prévu dans les remorques connues, tout en simplifiant la structure.

La remorque auto-porteuse R est équipée d'un dispositif de ramassage de chargement de bottes, comportant un moyen de ramassage (non représenté sur les figures 1 et 2) agencé latéralement par rapport au châssis 1 de la remorque pour ramasser individuellement une botte selon une direction de ramassage 100 parallèle à la direction de marche de la remorque, et transférer cette botte sur le plateau pivotant de chargement 5 basculé en position horizontale, et un moyen poussoir 13 qui est déplaçable au-dessus de ce plateau 5 parallèlement à l'axe longitudinal de la remorque pour permettre le transfert d'une deuxième botte sur le plateau de chargement. On distingue sur les figures 1 et 2 le guidage fixe 13.1 de ce moyen poussoir 13, ainsi que son vérin d'actionnement 13.3 et son poussoir 13.2.

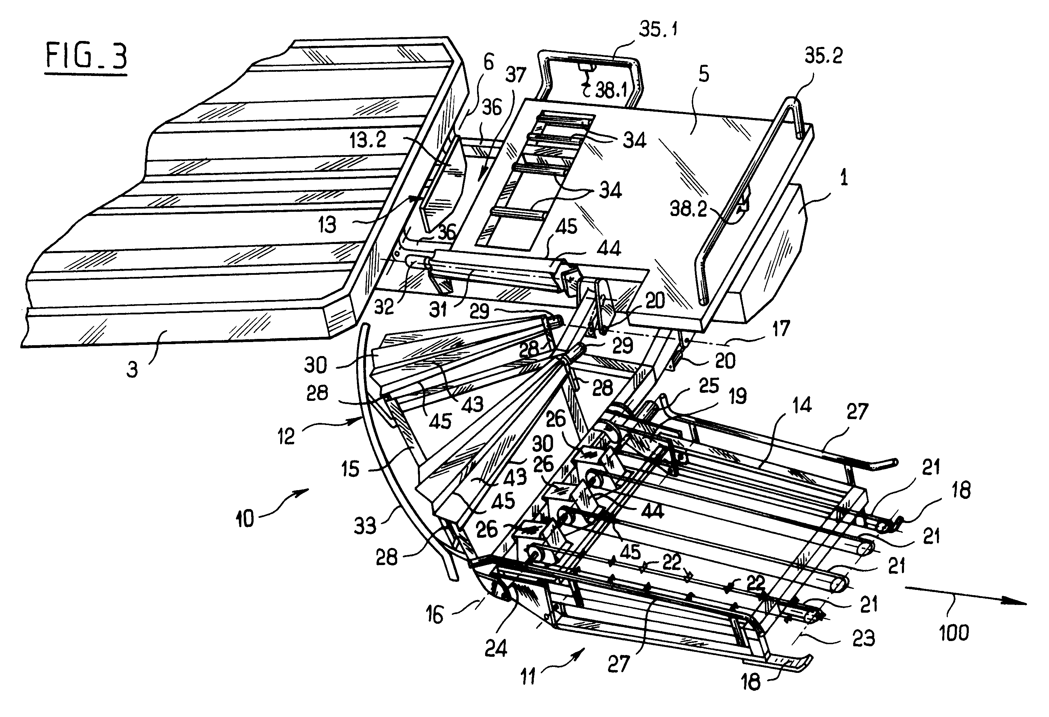

Ainsi que cela est mieux visible sur la figure 3, et conformément à une première caractéristique essentielle de l'invention, le moyen de ramassage 10 comporte successivement une rampe inclinée 11 agencée dans la direction de ramassage 100 pour amener une botte de sa position de ramassage au sol jusqu'à un niveau intermédiaire entre le sol et le niveau horizontal du plateau de chargement 5, et un chemin de convoyage incurvé et ascendant 12, formé de rouleaux d'entraînement motorisés 30, 31, agencé pour amener la botte au niveau du plateau de chargement 5 et la faire glisser transversalement sur ledit plateau.

Le moyen de ramassage et de chargement 10 comporte un premier châssis 14 associé à la rampe inclinée 11, et un deuxième châssis 15 associé au chemin de convoyage incurvé et ascendant 12. Le premier châssis 14 est articulé en 16 sur le deuxième châssis 15, ce dernier châssis étant articulé en 17 sur le châssis 1 de la remorque. En particulier, dans la position active déployée de la figure 3, l'axe d'articulation 16 sera perpendiculaire à l'axe longitudinal de la remorque (et donc aussi à la direction de ramassage 100), tandis que l'axe d'articulation 17 sera parallèle à cet axe longitudinal. Ces articulations permettent de déployer le moyen de ramassage et de chargement 10, c'est-à-dire l'amener dans la position illustrée sur la figure 3, ou au contraire de le replier et de le relever sur le châssis 1 de la remorque pour la position de transport. A cet effet, on pourra prévoir des vérins 19 intégrés au châssis 14 pour relever la rampe inclinée 11 sur le chemin de convoyage 12, et des vérins de relevage 20 pour relever l'ensemble soit sur le châssis de la remorque, le plateau de chargement 5 étant alors en position relevée sensiblement verticale, soit sur le plateau de chargement 5 alors à l'horizontale. Dans la position active déployée, le châssis 14 est en appui sur le sol par deux patins 18, les vérins 19 étant alors en position de blocage hydraulique. L'ensemble constitué par les châssis 14 et 15 est de préférence flottant (les vérins 20 associés étant alors en retour libre), et cet ensemble repose sur le sol par l'intermédiaire d'une petite roue pivotante (non représentée ici), par exemple montée en milieu de la poutre extérieure du châssis 15, cette roue suivant ainsi les dénivellations du terrain lors du ramassage.

Dans le mode de réalisation illustré sur la figure 3, la rampe inclinée 11 comporte des chaînes 21 équipées de griffes ou crocs 22 (illustrés sur une chaîne seulement pour alléger le dessin), ces chaînes s'étendant dans la direction de ramassage 100 en passant autour de petits galets calés sur un axe 23 voisin des patins 18 pour la prise de la botte au sol, l'autre extrémité des chaînes passant autour d'un arbre 24 qui est entraîné en rotation par un moteur hydraulique associé 25. L'entraînement des chaînes 21 permet ainsi à la botte de monter progressivement sur la rampe inclinée 11, pour arriver au chemin incurvé et ascendant 12 qui va permettre à cette botte de continuer à monter jusqu'au niveau du plateau de chargement 5 tout en effectuant une rotation de 90° l'amenant dans une disposition transversale sur le plateau de chargement 5. Lorsque la botte arrive sur ce chemin incurvé et ascendant 12, et donc commence progressivement à tourner sur elle-même, il importe d'éviter que la partie arrière de la botte soit encore accrochée par les griffes 22 des chaînes 21 et soit ainsi bloquée trop longtemps dans la direction de ramassage, afin de ne pas interférer avec le libre mouvement de rotation de la botte. A cet effet, il est prévu au moins un rouleau motorisé d'entraînement et de dégagement 26 servant à dégager des griffes 22 la botte qui passe sur le chemin de convoyage incurvé et ascendant 12. On a prévu ici des rouleaux d'entraînement et de dégagement 26 entre les chaînes adjacentes 21, ces rouleaux étant en l'espèce au nombre de trois dans la mesure où l'on a prévu un ensemble de quatre chaînes. Les rouleaux 26 sont entraînés en synchronisme avec les chaînes, de préférence par le moyen d'entraînement de celles-ci (moteur 25). Ainsi, lorsque la botte parvient au niveau des rouleaux 26, elle est progressivement soulevée et dégagée des pointes des griffes 22, pour arriver sur le chemin incurvé et ascendant 12.

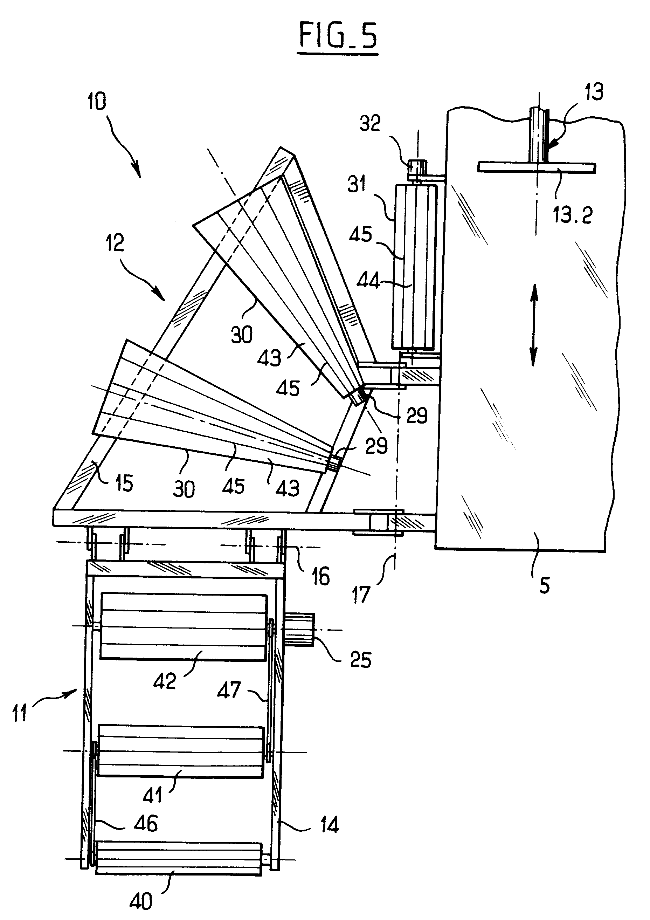

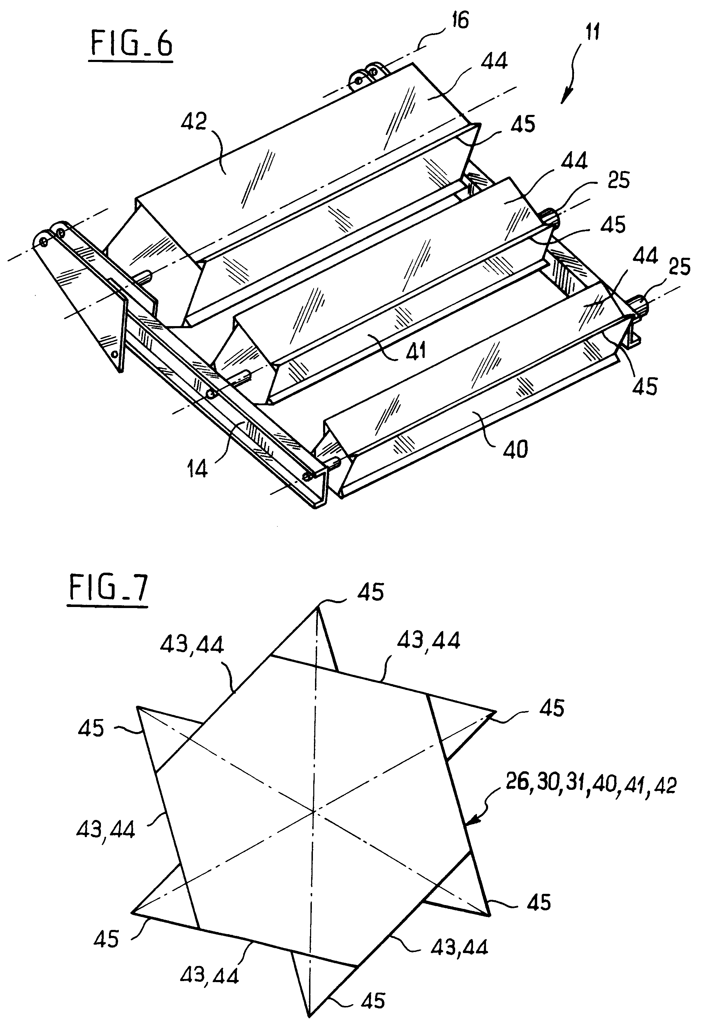

Les figure 5 et 6 illustrent une autre variante, dans laquelle la rampe inclinée 11 n'est plus constituée de chaînes à griffes, mais comporte des rouleaux cylindriques d'entraînement 40, 41, 42 à arêtes de prise longitudinales 45. Pour faciliter l'entraînement des rouleaux 40, 41, 42 les axes de ces rouleaux sont reliés entre eux par des chaînes 46 et 47, de façon à pouvoir être entraînés par un moteur hydraulique commun 25. Il est intéressant de prévoir, comme cela est illustré ici, que les rouleaux 40, 41, 42 présentent un diamètre croissant de l'entrée vers la sortie de la rampe inclinée 11. Ceci facilite à la fois la prise de la botte au sol, et son ascension progressive vers le chemin incurvé et ascendant 12.

Comme illustré sur les figures 3 et 5, et conformément à un mode d'exécution particulièrement avantageux, le chemin de convoyage incurvé et ascendant 12 comporte au moins deux rouleaux coniques de guidage et d'entraînement 30, en l'espèce deux rouleaux sur le mode de réalisation illustré en figure 3, ou en figure 5, et un rouleau terminal d'entraînement cylindrique 31 d'axe parallèle à l'axe longitudinal de la remorque, et adjacent au plateau de chargement 5 lorsque celui-ci est en position basculée horizontale. Le deuxième châssis 15 comporte ainsi des montants 28 en extrémité supérieure desquels sont montés les paliers de support des rouleaux coniques 30, ces rouleaux étant entraînés, de préférence individuellement, par des moteurs hydrauliques associés 29. Les rouleaux coniques 30 ont une surface latérale qui converge sensiblement vers l'axe vertical du centre de la trajectoire incurvée, et la conicité de ces rouleaux réalise la rotation de la botte passant dessus grâce aux différences des vitesses linéaires sur leur surface. Le rouleau terminal d'entraînement cylindrique 31 est quant à lui supporté par le châssis 1 de la remorque, ce qui permet à la fois de garantir sa direction, et aussi d'alléger la structure articulée comportant la rampe inclinée 11 et l'ensemble à rouleaux coniques 30. Le rouleau d'entraînement cylindrique 31 est quant à lui entraîné par un moteur hydraulique associé 32.

Il est intéressant de prévoir que les rouleaux coniques 30 sont formés de surfaces latérales trapézoïdales 43 se raccordant au niveau d'arêtes d'entraînement 45 agencées selon des génératrices. De même, les rouleaux d'entraînement et de dégagement 26 et le rouleau terminal d'entraînement 31 sont formés de faces latérales rectangulaires 44 se raccordant au niveau d'arêtes d'entraînement 45 agencées selon des génératrices. Lorsque la rampe inclinée 11 est constituée de rouleaux d'entraînement cylindriques (variante des figures 5 et 6), on utilisera de préférence une structure analogue à celle du rouleau terminal d'entraînement 31, avec pour ces rouleaux 40, 41, 42, des faces latérales rectangulaires 44 se raccordant au niveau d'arêtes d'entraînement 45 agencées selon des génératrices. Ainsi que cela est mieux visible sur le détail de la figure 6, il est intéressant que les rouleaux précités 26, 30, 31, 40, 41, 42, comportent six faces latérales formant une section transversale hexagonale, avec de ce fait un ensemble de six arêtes de prise 45 agencées au niveau des génératrices. Une telle forme est apparue particulièrement performante pour réaliser un entraînement optimal des bottes avec une structure très robuste.

On pourra prévoir que le chemin de convoyage incurvé et ascendant 12 soit bordé, au moins du côté extérieur de la trajectoire, par une rambarde 33 de guidage et de sécurité. Ainsi que cela est visible sur la figure 3, on peut également prévoir sur la rampe inclinée 11 des rambardes longitudinales 27, dont l'écartement est avantageusement réglable, pour faciliter le centrage de la botte lors de sa prise au sol et de sa montée progressive sur la rampe inclinée. En fait, les rouleaux coniques 30 sont capables d'assurer un entraînement et un guidage lors de la rotation de la botte sans intervention d'un quelconque organe mécanique agissant latéralement sur la botte. Il conviendra à cet effet de prévoir une vitesse d'entraînement des chaînes et des rouleaux coniques qui représente un compromis optimal entre une vitesse élevée de chargement et un maintien correct de la botte sur le chemin incurvé et ascendant, sans force centrifuge excessive. La rambarde incurvée 33 préserve de toute façon la précision de la trajectoire de la botte lors de son passage sur le chemin de convoyage incurvé et ascendant 12.

Le rouleau d'entraînement 31 est dimensionné de telle façon que l'extrémité de ces arêtes d'entraînement 45 soit, lors du contact avec la face inférieure de la botte, à un niveau légèrement supérieur à celui du plateau de chargement 5 en position horizontale, de façon à favoriser la dépose de la botte, et le glissement transversal de celle-ci sur ledit plateau. On pourra prévoir, pour faciliter ce glissement transversal, des rouleaux fous 34 dont l'axe est agencé parallèlement à l'axe longitudinal de la remorque.

Le châssis de la remorque (ou en variante le plateau de chargement) présente en outre une rambarde d'arrêt 35.1 contre laquelle vient en butée la botte transférée par le rouleau d'entraînement 31. La position de cette rambarde sera avantageusement réglable, de façon à pouvoir s'adapter à des dimensions différentes de bottes, pour avoir toujours un bon centrage. Dans cette position, la botte se trouve exactement en face du moyen poussoir 13 qui est monté sur le châssis de la remorque.

Conformément à une autre caractéristique essentielle de l'invention, le moyen poussoir 13 est monté en-dessous du plateau principal 3, en étant agencé pour pousser la botte ainsi transférée vers l'avant du plateau de chargement 5, de façon à permettre le transfert sur celui-ci d'une deuxième botte en arrière de la première botte. Ainsi que cela a été indiqué en référence à la figure 2, le moyen poussoir 13 comporte un guidage fixe 13.1 rigidement solidaire du châssis 1 de la remorque, et un équipage mobile se terminant par un poussoir proprement dit 13.2, en étant entraîné par un vérin d'actionnement associé 13.3. La course du vérin sera naturellement déterminée de façon à correspondre à la largeur de la botte concernée, cette course étant réglable par des capteurs associés non représentés ici, de façon à pouvoir s'adapter à une largeur quelconque de bottes. Sur la figure 3, on ne distingue que la partie avant du poussoir 13, et on constate que le plateau de chargement 5 est articulé sur le plateau principal 3 par deux brides latérales 36 délimitant entre elles une échancrure 37 qui est associée au passage du moyen poussoir 13. Le châssis 1 de la remorque est en outre équipé d'une deuxième rambarde formant butée d'arrêt 35.2, contre laquelle vient buter la botte qui a été poussée au moyen du moyen poussoir 13, afin de libérer l'emplacement pour le chargement d'une deuxième botte en arrière de la première.

Les opérations de ramassage et de chargement seront naturellement organisées de façon automatique, et des capteurs seront prévus pour organiser le cycle avec une rapidité et une sécurité optimales. En particulier, on constate que la rambarde 35.1 présente un capteur 38.1 témoignant du transfert correct de la première botte sur le plateau de chargement 5, ce qui permet de déclencher le moyen poussoir 13, et que la rambarde 35.2 présente également un capteur 38.2 qui permet de détecter le positionnement correct de cette première botte après son poussage. Il sera préférable de prévoir un arrêt des moteurs d'entraînement 25, 29, 32 des rouleaux et des chaînes dès qu'une botte a été transférée sur le plateau de chargement, ce qui peut être aisément commandé à partir du capteur 38.1, et ce jusqu'au glissement de cette botte par suite de son poussage, ce qui est aisément obtenu au moyen du capteur 38.2. Ceci permet d'éviter un chargement prématuré de la deuxième botte qui viendrait alors buter contre la première, avec le risque d'un mauvais positionnement, voire d'un basculement ou d'une chute de cette deuxième botte sur le sol. De la même façon, lors du chargement des deux bottes par relevage du plateau de chargement 5, les différents moteurs entraînant les rouleaux et les chaînes seront également arrêtés. On parvient ainsi à organiser un cycle automatique de ramassage et de chargement qui est à la fois rapide, fiable, et optimal sur le plan de la sécurité.

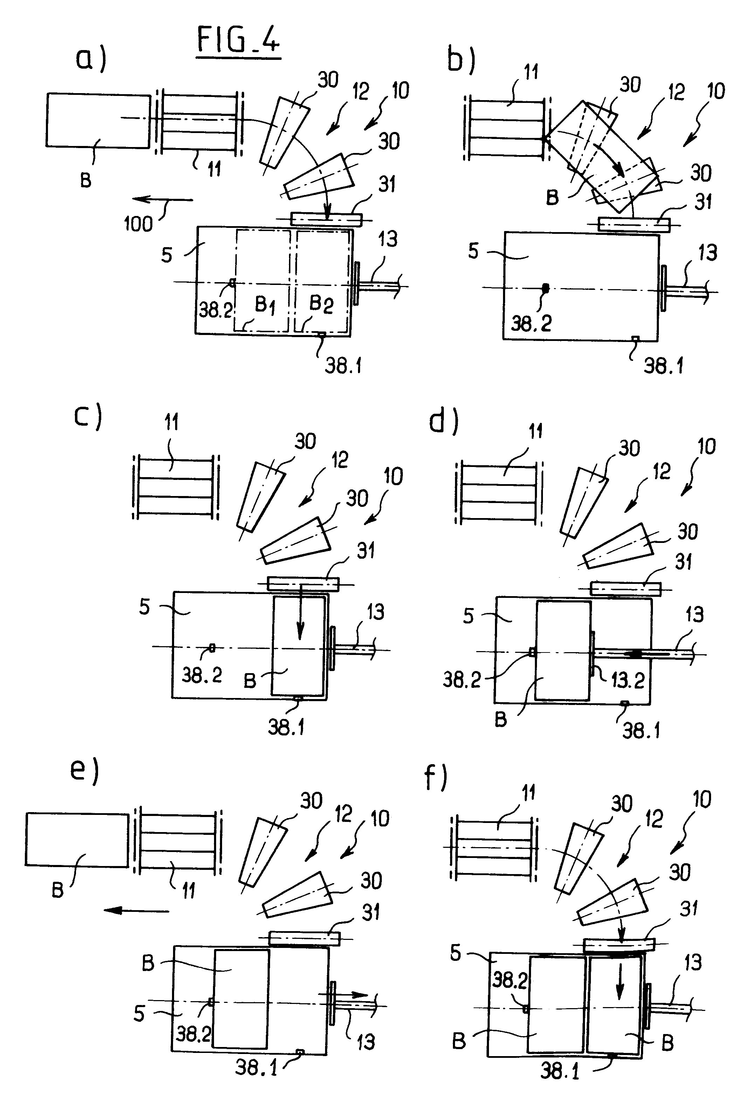

Le mode de ramassage et de chargement des deux bottes sur le plateau de chargement sera bien compris en se référant à la figure 4 qui illustre schématiquement, par des étapes a) à f), le mode de ramassage et de chargement successif de deux bottes sur le plateau pivotant 5 :
- a) l'opérateur amène la rampe inclinée 11 devant une botte B au sol, les moteurs entraînant les chaînes et les différents rouleaux du moyen de ramassage 10 étant actionnés (l'ordre d'actionnement étant par exemple donné par un capteur associé prévu à l'entrée de la rampe), et le moyen poussoir 13 est quant à lui en retrait ; on a noté B1 et B2 l'emplacement prévu sur le plateau 5 pour les deux bottes qui sont successivement chargées ;
- b) la botte B est en cours de chargement, en passant de la rampe inclinée 11 au chemin incurvé et ascendant 12 ; le moyen poussoir 13 est toujours en retrait;
- c) la botte B a été glissée sur le plateau de chargement 5, et elle est en appui contre le capteur 38.1 de la rambarde associée;
- d) la sortie du moyen poussoir 13 a été enclenchée, et la botte B ainsi transférée a été glissée vers l'avant du plateau de chargement, jusqu'à sa butée contre le capteur 38.2 de l'autre rambarde, après quoi le moyen poussoir est automatiquement rétracté ;
- e) une deuxième botte B est approchée pour être transférée de la même façon que la première au moyen de la rampe inclinée 11 et du chemin incurvé et ascendant 12 ; le moyen poussoir est maintenu en position rétractée.
- f) la deuxième botte B est glissée sur le plateau de chargement 5, directement en arrière de la première botte, ce qui autorise (par le capteur 38.1) le relevage du plateau de chargement pour un transfert de ces deux bottes en position superposée sur le plateau principal 3 de la remorque.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Dispositif de ramassage et de chargement de bottes pour remorques auto-porteuses, comportant un moyen de ramassage agencé latéralement par rapport au châssis de la remorque pour ramasser une botte au sol selon une direction de ramassage parallèle à la direction de marche de la remorque et transférer cette botte sur un plateau pivotant de chargement basculé en position horizontale, et un moyen poussoir qui est déplaçable au-dessus de ce plateau parallèlement à l'axe longitudinal de la remorque pour permettre le transfert d'une deuxième botte sur le plateau de chargement, ledit plateau étant articulé autour d'un axe transversal en avant de la remorque pour charger, par relevage jusqu'à une position sensiblement verticale, les deux bottes ainsi transférées sur un plateau principal de réception et de déchargement en bloc des bottes qui est articulé en arrière dudit châssis, caractérisé en ce que :
- le moyen de ramassage (10) comporte successivement une rampe inclinée (11) agencée dans la direction de ramassage pour amener une botte de sa position de ramassage au sol jusqu'à un niveau intermédiaire entre le sol et le niveau horizontal du plateau de chargement (5), et un chemin de convoyage incurvé et ascendant (12), formé de rouleaux d'entraînement motorisés (30, 31), agencé pour amener la botte au niveau du plateau de chargement (5) pour faire glisser transversalement cette botte sur ledit plateau;
- le moyen poussoir (13) est monté sur le châssis de la remorque (1) en-dessous du plateau principal (3), en étant agencé pour pousser la botte ainsi transférée vers l'avant du plateau de chargement (5) de façon à permettre le transfert sur celui-ci d'une deuxième botte en arrière de la première botte.

2. Dispositif selon la revendication 1, caractérisé en ce que la rampe inclinée (11) comporte des chaînes (21) équipées de griffes, avec, en partie haute de celle-ci, au moins un rouleau motorisé d'entraînement et de dégagement (26) servant à dégager des griffes (22) la botte qui passe sur le chemin de convoyage incurvé et ascendant (12).

3. Dispositif selon la revendication 2, caractérisé en ce que la rampe inclinée (11) comporte des rouleaux d'entraînement et de dégagement (26) entre les chaînes adjacentes (21), et ces rouleaux (26) sont entraînés en synchronisme avec lesdites chaînes, de préférence par un moyen d'entraînement commun (25).

4. Dispositif selon la revendication 1, caractérisé en ce que la rampe inclinée (11) comporte des rouleaux cylindriques d'entraînement (40, 41, 42) à arêtes de prise longitudinales (45), lesdits rouleaux ayant un diamètre croissant de l'entrée vers la sortie de ladite rampe.

5. Dispositif selon la revendication 1, caractérisé en ce que le chemin de convoyage incurvé (12) comporte au moins deux rouleaux coniques de guidage et d'entraînement (30) formant une trajectoire ascendante incurvée en quart de cercle, et un rouleau terminal d'entraînement cylindrique (31) d'axe parallèle à l'axe longitudinal de la remorque et adjacent au plateau de chargement (5).

6. Dispositif selon la revendication 5, caractérisé en ce que les rouleaux coniques (30) sont formés de faces latérales trapézoïdales (43) se raccordant au niveau d'arêtes d'entraînement (45) agencées selon des génératrices.

7. Dispositif selon l'une des revendications 2, 4 et 5, caractérisé en ce que le ou les rouleaux d'entraînement et/ou de dégagement (26, 31, 40, 41, 42) et le rouleau terminal d'entraînement (31) sont formés de faces latérales rectangulaires (44) se raccordant au niveau d'arêtes d'entraînement (45) agencées selon des génératrices.

8. Dispositif selon la revendication 6 ou la revendication 7, caractérisé en ce que les rouleaux (26, 30, 31, 40, 41, 42) comportent six faces latérales formant une section transversale hexagonale.

9. Dispositif selon l'une des revendications 1 à 8, caractérisé en ce que le chemin de convoyage incurvé et ascendant (12) est bordé, du côté extérieur de la trajectoire, par une rambarde (33) de guidage et de sécurité.

10. Dispositif selon l'une des revendications 1 à 9, caractérisé en ce que le plateau de chargement (5) est articulé en extrémité avant du plateau principal (3) par deux brides latérales (36) délimitant une échancrure (37) associée au passage du moyen poussoir (13)

11. Dispositif selon l'une des revendications 1 à 10, caractérisé en ce que le moyen de ramassage (10) est relevable et repliable sur le châssis (1) de la remorque ou sur le plateau de chargement (5), grâce à une première articulation (16) entre la rampe inclinée (11) et le chemin de convoyage incurvé et ascendant (12), et à une deuxième articulation (17) entre ledit chemin et le châssis de la remorque.
